# EUROPÄISCHE PATENTANMELDUNG

(11) **EP 2 348 328 A2**
(43) Veröffentlichungstag der Anmeldung: **27.07.2011**
(21) Anmeldenummer: 11000261.5
(22) Anmeldetag: 14.01.2011
(51) Int. Cl.: G01S 5/16, F41G 7/22

(54) **Verfahren und Vorrichtung zur Ortsbestimmung eines fliegenden Ziels**

(30) Priorität: 21.01.2010 DE 102010005199
(71) Anmelder: Diehl BGT Defence GmbH & Co.KG, 88662 Überlingen (DE)
(72) Erfinder: Dold, Raimund, 88662 Überlingen (DE); Kuhn, Thomas, 88633 Heiligenberg (DE); Hinding, Wilhelm, 88662 Überlingen (DE)
(74) Vertreter: Diehl Patentabteilung

(57) **Zusammenfassung**

Die Erfindung betrifft ein Verfahren zur Ortsbestimmung eines fliegenden Ziels (8, 30), bei dem das Ziel (8, 30) von zumindest zwei voneinander beabstandeten Suchersystemen (10, 12, 14, 28, 32) erkannt und vermessen wird und aus daraus abgeleiteten Vermessungsdaten die Position des Ziels (8, 30) relativ zu zumindest einem der beiden Suchersysteme (10, 12, 14, 28, 32) bestimmt wird.

Um ein Ziel (8, 30) unauffällig und ohne aktive Strahlung in seiner Position vermessen zu können, wird vorgeschlagen, dass die Suchersysteme (10, 12, 14, 28, 32) datenvernetzte, passive Zielverfolgungssysteme für Flugkörper (26) sind, die das Ziel (8, 30) selbständig verfolgen und die Flugkörper (26) auf das Ziel (8, 30) ausrichten, und die von ihnen ermittelten Vermessungsdaten zusammengeführt und daraus der Ort des Ziels (8, 30) bestimmt wird.

## Beschreibung

Die Erfindung betrifft ein Verfahren zur Ortsbestimmung eines fliegenden Ziels, bei dem das Ziel von zumindest zwei voneinander beabstandeten Suchersystemen erkannt und vermessen wird und aus daraus abgeleiteten Vermessungsdaten die Position des Ziels relativ zu zumindest einem der beiden Suchersysteme bestimmt wird.

Zur Bekämpfung von Luftzielen, beispielsweise Lenkflugkörpern, Artillerieraketen oder Flugzeugen, werden Lenkflugkörper mit einem Suchkopf verwendet, die auf das zu bekämpfende Ziel eingewiesen werden. Üblicherweise erzeugt hierfür der Suchkopf ein Bild des Ziels und seiner Umgebung und ein Bediener des Flugkörpers oder dessen Trägerplattform zum Starten des Flugkörpers sucht das Ziel anhand des Bildes manuell aus und gibt den ausgewählten Bildbereich an das Prozessmittel des Flugkörpers. Anhand von Bildeigenschaften des Ziels erfasst der Flugkörper bzw. dessen Suchersystem das Ziel und verfolgt es selbständig, um nach einem Start des Flugkörpers selbständig auf das Ziel zufliegen und dieses treffen zu können.

Zum vollständigen Einweisen eines Lenkflugkörpers ist es sinnvoll, dem Lenkflugkörper auch Informationen zur Entfernung des zu bekämpfenden Ziels mitzuteilen. Typischerweise wird diese Information mit aktiver Sensorik, beispielsweise Radar oder einem Laserentfernungsmesser, bestimmt. Aktive Sensorik ist jedoch ihrerseits leicht auszumachen und daher im Gefechtsfeld in unerwünschter Weise exponiert. Hierdurch erhöht sich das Gefahrenpotential für die Sensorik und die Bediener der Sensorik erheblich.

Es ist eine Aufgabe der vorliegenden Erfindung, ein Verfahren und eine Vorrichtung zur Ortsbestimmung eines fliegenden Ziels anzugeben, die weniger auffällig sind.

Die auf das Verfahren gerichtete Aufgabe wird durch ein Verfahren der eingangs genannten Art gelöst, bei dem die Suchersysteme erfindungsgemäß datenvernetzte passive Zielverfolgungssysteme für Flugkörper sind, wobei die von Ihnen ermittelten Vermessungsdaten zusammengeführt und daraus der Ort des Ziels bestimmt wird. Die Zielverfolgungssysteme sind passiv, d. h. sie sind in der Lage, zumindest in einem stillen Arbeitsmodus selbst keine gerichtete elektromagnetische Strahlung auszusenden. Übliche Wärmestrahlung oder detektorspezifische Signale oder dergleichen stören den Begriff der Passivität hierbei nicht.

Die Bestimmung der Entfernung des Ziels kann durch Triangulation aus den Vermessungsdaten erfolgen. Da die beiden Suchersysteme und das Ziel ein Dreieck bilden, reicht es aus, wenn der Abstand zwischen den Suchersystemen und der Winkel zwischen dem fliegenden Ziel und dem jeweils anderen Suchersystem aus der Sicht eines jeden Suchersystems bekannt sind. Hierzu müssen die beiden Suchersysteme dasselbe Ziel anpeilen und zum gleichen Zeitpunkt die Sichtlinie zu diesem Vermessen. Zweckmäßigerweise verfolgen beide Suchersysteme das sich relativ zu ihnen bewegende Ziel während sie das Ziel vermessen. Das Zusammenführen der Vermessungsdaten kann an jedem Ort geschehen, beispielsweise an einem der Orte der passiven Suchersysteme oder einem anderen geeigneten Ort. Sind außerdem die Orte der Suchersysteme und die Ausrichtung der Suchersysteme im Raum bekannt, so kann der genaue Ort des fliegenden Ziels bestimmt werden.

Für die Ortsbestimmung ist es ausreichend, wenn der Abstand des fliegenden Ziels zu einem der Suchersysteme ermittelt wird. Zweckmäßigerweise umfasst die Ortsbestimmung neben einer Entfernungsbestimmung auch die Bestimmung der Raumkoordinaten des fliegenden Ziels zu einem vorgegebenen Raumpunkt. Das Vermessen des fliegenden Ziels kann geschehen, indem zumindest eine Rauminformation des fliegenden Ziels relativ zu beiden Suchersystemen ermittelt wird, beispielsweise eine Winkelinformation. Zielverfolgungssysteme sind zweckmäßigerweise solche Systeme, die das Ziel selbständig verfolgen und insbesondere einen Flugkörper auf das Ziel ausrichten können, wobei es für eine Ausrichtung ausreichend ist, wenn irgendein Element des Flugkörpers auf das Ziel ausgerichtet wird, beispielweise eine Sucheroptik.

Die Suchersysteme sind zweckmäßigerweise beweglich zueinander und sind beispielsweise auf zwei Fahrzeuge verteilt. Die Fahrzeuge können Bodenfahrzeuge, Wasserfahrzeuge oder Luftfahrzeuge sein. Ebenfalls möglich ist es, dass ein Suchersystem auf dem Boden positioniert und das zweite Suchersystem in der Luft ist, beispielsweise in einem Flugzeug, einem Lenkflugkörper oder dergleichen.

In einer vorteilhaften Ausführungsform der Erfindung ist zumindest eines der Suchersysteme Teil einer Trägerplattform, aus der zumindest ein Flugkörper gestartet wird. Systeme der bodengestützten Luftverteidigung können sich auf eine Anzahl von Fahrzeugen verteilen, die im Gelände verteilt aufgestellt werden. Sind mindestens zwei Suchersysteme auf verschiedenen Fahrzeugen verfügbar, ermöglichst dies einen "silent mode" der Ortsbestimmung des fliegenden Ziels. Die präzise Lokalisierung der Trägerplattformen, also der Startgeräte, im Gefechtsfeld ist hierbei ohne weiteres möglich.

Weiter ist es vorteilhaft, wenn das Suchersystem der Trägerplattform zusätzlich zu einem Suchersystem des zu startenden Flugkörpers vorhanden ist. Diese Ausführungsform hat den Vorteil, dass der Flugkörper schon dann auf das Ziel eingewiesen werden kann, wenn selbst noch die Sicht auf das Ziel versperrt ist. Hierbei kann das Suchersystem der Trägerplattform das Ziel erfassen und verfolgen und Zieldaten an den Flugkörper übergeben. Bei geeigneter Auswahl der Daten kann das Suchersystem des Flugkörpers das Ziel als solches anhand der übergebenen Zieldaten erfassen während ihm die Sicht auf das Ziel versperrt ist. Beispielsweise kann für den Flugkörper eine eigene Sicht auf das zu verfolgende Ziel simuliert werden, sodass der Flugkörper - selbst wenn ihm die eigene Sicht auf das Ziel versperrt ist, da er beispielsweise in einem verschlossenen Behälter lagert - bereits vorbereitende Aktionen für einen Start ausführen kann. Das Suchersystem des Flugkörpers kann auf diese Weise bereits im geschlossenen Behälter das Ziel erfassen, sodass eine lock-on before launch-Eigenschaft (LOBL-Eigenschaft) erhalten bleibt.

Die Zieldaten müssen das Ziel ausreichend beschreiben und können beliebige Daten sein, die diese Anforderung erfüllen. Die Zieldaten können Bilddaten oder Daten aus einer Bildverarbeitung sein. Besonders geeignet sind Bilddaten aus einem Suchersystem der Trägerplattform und sie sind insbesondere ein vom Suchersystem der Trägerplattform aufgenommenes Bild des Ziels. Alternativ oder zusätzlich können die Zieldaten Daten sein, die aus einer Auswertung eines vom Suchersystem der Trägerplattform aufgenommenen Bilds ermitteltet wurden. Möglich sind Daten zur Richtung und/oder Bewegung des Ziels und/oder Bilddaten des Ziels, wie eine Intensität, Form oder eine Ausdehnung des Ziels. Die dem Flugkörper von der Trägerplattform übergebenen Zieldaten sind zweckmäßigerweise die gleichen Daten, die das Suchersystem des Flugkörpers, wenn es an der gleichen Stelle wie das Suchersystem der Trägerplattform wäre, erzeugen würde.

Die Trägerplattform kann eine bodengestützte Abschussbasis des Flugkörpers, beispielsweise ein Aufsatz auf einen LKW, sein oder ein Flugzeug, in dem der Flugkörper verschlossen gelagert ist, um eine gute Tarnung des Flugzeugs zu erhalten.

Weiter vorteilhaft ist es, wenn ein Flugkörper aus einer Trägerplattform gestartet wird und eines der beiden Suchersysteme Teil des Flugkörpers und das zweite Suchersystem Teil der Trägerplattform ist. Auf diese Weise kann eine Ortsbestimmung des Ziels bereits mit einem einzigen Fahrzeug erfolgen, nachdem der Flugkörper von dem Fahrzeug gestartet wurde. Hierdurch entsteht ein notwendiger Abstand zwischen den beiden Suchersystemen, sodass die Ortsbestimmung mittels Triangulation erfolgen kann. Zweckmäßigerweise werden die Vermessungsdaten des Suchersystems der Trägerplattform an das Suchersystem des Flugkörpers übermittelt, sodass am Ort des Flugkörpers die Datenfusion erfolgen kann und dem Flugkörper somit die Entfernung zum anvisierten Ziel bekannt ist.

Eine Ortsbestimmung des Ziels kann frühzeitig erfolgen, wenn beide Suchersysteme jeweils Teil einer Trägerplattform sind, aus der jeweils Flugkörper gestartet werden. Ein einfliegendes Ziel kann von einem Schwarm von beispielsweise Fahrzeugen frühzeitig erkannt und vermessen und bekämpft werden.

Um einen Verteidigungserfolg zu erhöhen, ist es vorteilhaft, mit Hilfe der beiden Suchersysteme eine Flugbahn und einen Auftreffpunkt des Ziels zu bestimmen. Ist der Auftreffpunkt an einem ungefährlichen Ort, so kann auf eine Bekämpfung verzichtet werden, wohingegen ein gefährlich einfliegendes Ziel vorrangig bekämpft werden kann, beispielsweise von mehreren Trägerplattformen gleichzeitig. Hierbei ist es vorteilhaft, wenn aus der Flugbahn bestimmt wird, welche der beiden Trägerplattformen zur Abwehr des fliegenden Ziels eingesetzt wird. Vorteilhafterweise wird diejenige Trägerplattform zur Abwehr des fliegenden Ziels eingesetzt, die am nächsten zum Auftreffpunkt des Ziels liegt. Da sich der Sichtlinienwinkel relativ zu dieser Trägerplattform am wenigstens verändert ist eine Bekämpfung von dieser Trägerplattform am aussichtsreichsten.

Eine weitere vorteilhafte Ausführungsform der Erfindung sieht vor, dass diese Suchersysteme Teil eines Fahrzeugschwarms aus zumindest drei Fahrzeugen mit jeweils einer Trägerplattform zum Starten von Flugkörpern sind, die über ein Datennetzwerk miteinander verbunden sind, und die Ortsbestimmung dezentral in zumindest zwei der Fahrzeuge erfolgt. Durch die zentrale Datenfusion und Auswertung und Ortsbestimmung des Ziels bleibt das Netzwerk auch dann funktionstüchtig, wenn einzelne Netzknoten ausfallen, beispielsweise weil sie getroffen wurden. Es kann jederzeit auf einen der Knoten zurückgegriffen werden, sodass die ermittelte Position des Ziels oder dessen Entfernung zu jedem Knotenpunkt bekannt sein kann.

Die auf die Vorrichtung gerichtete Aufgabe wird durch eine Vorrichtung zur Ortsbestimmung eines fliegenden Ziels mit zumindest zwei voneinander beabstandeten passiven Suchersystemen und zumindest einem Prozessmittel gelöst, das dazu vorbereitet ist, die Position des Ziels aus Daten der beiden Suchersysteme zu vermessen und aus den Vermessungsdaten die Position des Ziels relativ zu den beiden Suchersystemen zu bestimmen. Es wird vorgeschlagen, dass die Suchersysteme erfindungsgemäß datenvernetzte, passive Zielverfolgungssysteme für Flugkörper sind, die dazu vorbereitet sind, das Ziel selbständig zu verfolgen und die Flugkörper auf das Ziel auszurichten. Es kann eine passive Ortsbestimmung mit einfachen Mitteln erreicht werden, sodass eine gute Tarnung der Vorrichtung erhalten bleibt.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig. 1: eine Anzahl von in einem Gelände verteilten Fahrzeugen mit jeweils einer Trägerplattform zum Starten von Flugkörpern,
- Fig. 2: einen aus einem Flugzeug gestarteten Flugkörper, .
- Fig. 3: den Flugkörper noch innerhalb des Flugzeugs und
- Fig. 4: miteinander verbundene Suchersysteme des Flugzeugs und des Flugkörpers.

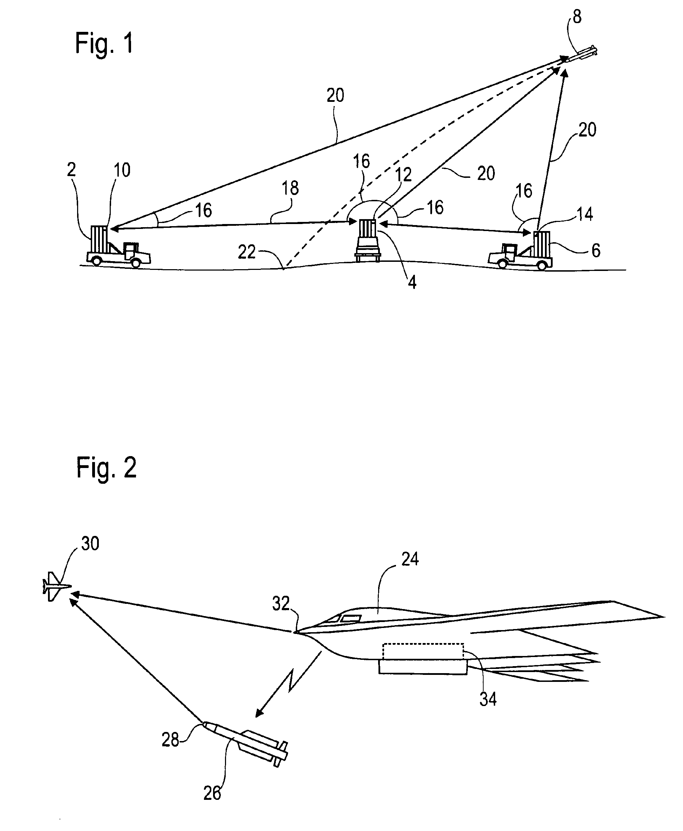

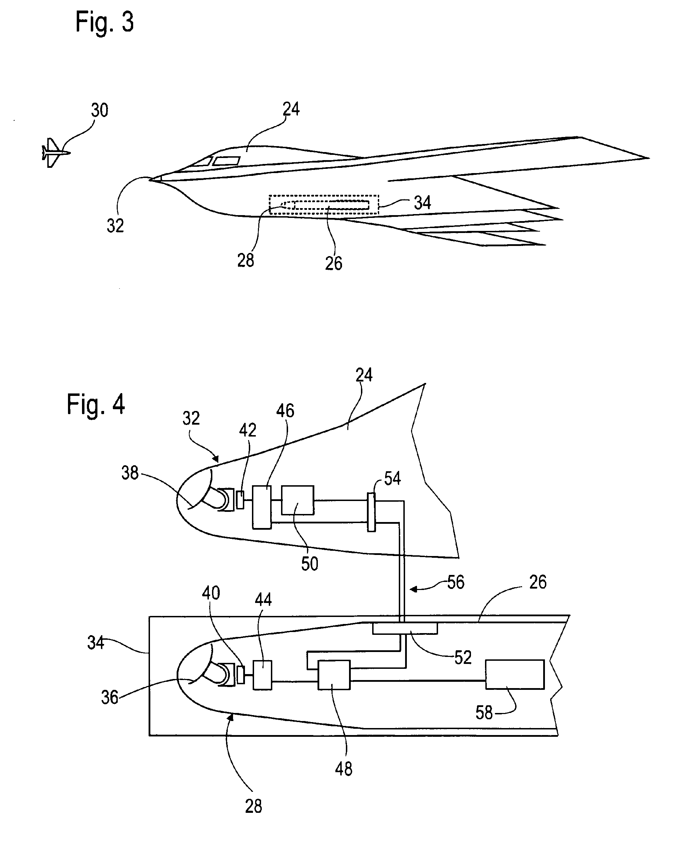

In Fig. 1 ist ein Schwarm von Fahrzeugen dargestellt, die jeweils eine Trägerplattform 2, 4, 6 zum Starten von mehreren Flugkörpern tragen. Jede Trägerplattform 2, 4, 6 ist mit 16 Behältern bestückt, in denen jeweils ein Flugkörper vollständig eingeschlossen ist, so dass er von Außeneinwirkungen, wie Schmutz oder Strahlung geschützt ist und keine Sicht nach außen hat. Jeder der Flugkörper trägt einen Suchkopf mit einem passiven Suchersystem, das im infraroten Spektralbereich empfindlich ist und das zum Erfassen und Verfolgen eines Ziels 8 vorbereitet ist. Das Suchersystem ist in Fig. 4 detaillierter dargestellt. Das gleiche Suchersystem 10, 12, 14 wie an jedem Flugkörper ist zusätzlich an jeder Trägerplattform 2, 4, 6 vorhanden.

Die Suchersysteme 10, 12, 14 sind signaltechnisch alle miteinander vernetzt, so dass sie ihre Position und Zieldaten austauschen können. Außerdem sind die Trägerplattformen 2, 4, 6 mit Empfangsgeräten zum Empfang von Positionsdaten, z.B. GPS-Daten, ausgerüstet, so dass ihre Positionen bekannt sind.

Erkennt zumindest eines der Suchersysteme 10, 12, 14 ein Ziel 8, in Fig. 1 ist das Ziel 8 eine einfliegende Artillerierakete, so teilt es dies den übrigen Suchersystemen 10, 12, 14 mit. Die Suchersysteme 10, 12, 14 richten ihre Sucheroptik auf das Ziel 8 und verfolgen es. Zur Bestimmung der Entfernung des Ziels 8 zu einem vorbestimmten Ort, z. B. einem der Suchersysteme 10, 12, 14, wird das Ziel 8 von den Suchersystemen 10, 12, 14 vermessen. Hierzu vermessen die Suchersysteme 10, 12, 14 jeweils den Relativwinkel 16 zwischen ihrer Sichtlinie zum Ziel 8 und einer weiteren vorbestimmten Richtung, z. B. einer absoluten Richtung oder zu einem benachbarten Suchersystem 10, 12, 14, wie in Fig. 1 angedeutet ist. Die Relativwinkel 16 sind Raumwinkel im dreidimensionalen Raum und bestehen jeweils aus einem zweidimensionalen Einheitsvektor mit zwei Polarkoordinatenelementen.

Aus den Relativwinkeln 16 von zumindest zwei Suchersystemen 10, 12, 14 und deren Abstand 18 zueinander wird die Entfernung 20 des Ziels 8 zu diesen Suchersystemen 10, 12, 14 bestimmt. Die Einweisung der Flugkörper aus den entsprechenden Trägerplattformen 2, 4, 6 auf das Ziel 8 umfasst nun neben der Richtung des Ziels 8 auch den Abstand von den Trägerplattformen 2, 4, 6 zum Ziel. In einer anderen Ausführungsform der Erfindung werden zur Positionsbestimmung des Ziels 8 zusätzlich die Ortskoordinaten der Suchersysteme 10, 12, 14 verwendet. Zusätzlich zur Entfernung ist somit der absolute Ort des Ziels 8 im Netzwerk bekannt.

Aus der Veränderung des Orts des Ziels 8 mit der Zeit wird die Geschwindigkeit des Ziels 8, dessen Flugtrajektorie und daraus dessen voraussichtlicher Aufschlagpunkt 22 berechnet. In Fig. 1 liegt der Aufschlagpunkt 22 neben der Trägerplattform 4, die von allen Trägerplattformen 2, 4, 6 dem Aufschlagpunkt 22 am nächsten ist. Diese Trägerplattform 4 wird daher zur Bekämpfung des Ziels 8 bestimmt. Die Trägerplattform 4 weist einen Ihrer Flugkörper auf das Ziel 8 ein, beispielsweise indem sie Steuerungsbefehle an den Flugkörper zur Ausrichtung seines Flugs auf das Ziel 8 gibt. Ebenfalls möglich ist die Ausrichtung einer Sucheroptik des Suchersystems des Flugkörpers auf das Ziel 8 noch bevor der Flugkörper aus dem geschlossenen Behälter gestartet wird. Vor, während oder nach der Einweisung wird der Flugkörper gestartet, der auf das Ziel 8 zufliegt und es bekämpft. Die Auswahl der Trägerplattform 2, 4, 6 zum Bekämpfen des Ziels 8 sowie auch die Ortsbestimmung des Ziels 8 kann zentral bei einem Fahrzeug erfolgen oder dezentral bei allen oder einer Anzahl der Fahrzeuge.

Ein weiteres Ausführungsbeispiel ist in Fig. 2 dargestellt. Aus einem Flugzeug, das als Trägerplattform 24 für einen Flugkörper 26 dient, wurde der Flugkörper 26 gestartet. Sein Suchkopf beinhaltet ein Suchersystem 28, das auf das Ziel 30 ausgerichtet ist. Ebenfalls auf das Ziel 30 ausgerichtet ist ein Suchersystem 32, das an der Nase der Trägerplattform 24 angeordnet ist. Aus beiden Suchersystemen 28, 32 wird das Ziel 30 vermessen, analog wie zu Fig. 1 beschrieben ist. Die Trägerplattform 24 übermittelt ihre Vermessungsergebnisse an den Flugkörper 26, wie in Fig. 2 angedeutet ist, der aus der Datenfusion beider Vermessungsdaten die Entfernung von ihm zum Ziel 30 und insbesondere den absoluten Ort des Ziels 30 errechnet.

Die Ortsbestimmung des Ziels 8, 30 kann in einem weiteren Ausführungsbeispiel auch mit nur einer der Trägerplattformen 2, 4, 6 aus Fig. 1 erfolgen, indem das Ziel 8, 30 gesichtet, der Flugkörper 26 gestartet und das Ziel8, 30 vermessen wird, wie zu Fig. 2 beschrieben ist.

Fig. 3 zeigt den Flugkörper 26 noch in einem geschlossen Behälter 34 des Flugzeugs noch vor dem Start des Flugkörpers 26. In Fig. 4 sind die Suchersysteme 28, 32 des Flugzeugs und des Flugkörpers 26, das sich noch im Flugzeug befindet, detaillierter dargestellt. Die Beschreibung zu den Figuren 3 und 4 ist analog auf einen Flugkörper in einer Trägerplattform 2, 4, 6 aus Fig. 1 anwendbar.

Die Suchersysteme 28, 32 enthalten jeweils eine Sucheroptik 36, 38 mit Linsen und/oder Spiegeln, einen Detektor 40, 42, eine Sucherbildverarbeitung 44, 46, und ein Prozessmittel 48, 50 zur Zielerfassung, Zielverfolgung und zur Steuerung von Aktionen. Die Suchersysteme 28, 32 sind jeweils mit einer Schnittstelle 52, 54 signaltechnisch miteinander verbunden. Die Verbindung geschieht beispielsweise über ein Kabel 56 mit einer Sollbruchstelle, an der das Kabel 56 bei einem Abwurf des Flugkörpers 26 aus der Trägerplattform 24 abreißt.

In einer ersten Ausführungsform sind die Sucheroptiken 36, 38 identisch ausgeführt, ebenso wie die Detektoren 40, 42. Hierdurch werden - bei angenommener gleicher Position und Ausrichtung im Raum - identische Bilder auf die Detektoren 40, 42 abgebildet und von den Sucherbildverarbeitungen 44, 46 verarbeitet, die ebenfalls gleich ausgeführt sein können. Auf diese Weise werden die gleichen Bilddaten und/oder die gleichen Daten aus einer Bildverarbeitung aus den Sucherbildverarbeitungen 44, 46 abgeführt und den Prozessmitteln 48, 50 zugeführt. Die Sucherbildverarbeitung 46 gibt ihre Daten an das Prozessmittel 50, das beispielsweise das vom Suchersystem 32 aufgenommene Bild an einen Piloten der Trägerplattform 24 weitergibt bzw. an ein Anzeigemittel für den Piloten. Das Bild oder die Bilddaten werden jedoch auch über die Schnittstellen 52, 54 an das Prozessmittel 48 als Zieldaten übermittelt, das zwei beispielsweise symmetrische Eingänge aufweist. Dem Prozessmittel 48 werden somit die Bilder bzw. die Bilddaten aus beiden Sucherbildverarbeitungen 44, 46 zur Verfügung gestellt, wobei die Bilder und/oder Bilddaten identisch sein können. Bei dieser Ausführungsform sind die Zieldaten somit Bilddaten, also Daten, die die Informationen eines Bilds tragen. In anderen Ausführungsformen können die Zieldaten andere Daten sein, z. B. solche, die aus einer Bildverarbeitung gewonnen wurden. In jedem Fall sind die Zieldaten das Ziel beschreibende Daten.

Wie in Fig. 3 dargestellt, ist der Flugkörper 26 im Behälter 34 eingeschlossen, sodass sein Suchkopf und seine darin enthaltene Sucheroptik 36 keinen optischen Kontakt zum Ziel 30 hat. Dennoch wird dem Prozessmittel 48 ein Bild zur Verfügung gestellt, das das Suchersystem 28 des Flugkörpers 26 selbst erzeugen würde, wenn es freie Sicht auf das Ziel 30 hätte, einmal abgesehen von einem möglichen kleinen Bildversatz durch die unterschiedlichen Positionen der Suchersysteme 28, 32 an bzw. in der Trägerplattform 24. Dem Suchersystem 28 wird somit die freie Sicht auf das Ziel 30 simuliert, sodass das Suchersystem 28 genauso reagiert, als wenn es selbst eine freie Sicht auf das Ziel 30 hätte.

Eine dieser Reaktionen ist, dass das Prozessmittel 48 das Ziel 30 anhand der Bilddaten oder Bilder des Suchersystems 32 erfasst. Auf diese Weise findet eine Zielerfassung durch den Flugkörper 2 bzw. dessen Suchersystem 12 statt, noch bevor dieses erstmalig eine freie Sicht auf das Ziel 8 hat. Eine weitere Aktion ist, dass das Ziel 30 bei seiner Bewegung relativ zur Trägerplattform 24 vom Suchersystem 28 des Flugkörpers 26 verfolgt wird. Hierzu wird das Ziel 30 im Bild durch das Prozessmittel 48 verfolgt, das Steuerbefehle an die Sucheroptik 36 gibt, sodass diese auf das Ziel 30 ausgerichtet wird. Das Gewinnen der Steuerdaten geschieht in analoger Weise, wie das Gewinnen der Steuerdaten für die Sucheroptik 38 in der Trägerplattform 24 durch das Prozessmittel 50. Die Sucheroptik 36 des Flugkörpers 26 wird so mit der Sucheroptik 38 der Trägerplattform 24 simultan mitgeführt. Mit der Simulation der freien Sicht auf das Ziel 30 kann der Flugkörper 26 alle Aktionen ausführen, die er bei freier Sicht auf das Ziel von sich aus ausführen würde. So kann er z. B. einen Aktuator 58 steuern zur Durchführung einer Bewegung.

Nach erfolgreicher Zielerfassung wird der Flugkörper 26 aus der Trägerplattform 24 gestartet und verfolgt nun selbständig das Ziel 30, wie in Fig. 2 schematisch dargestellt ist. Zum Start des Flugkörpers 26 wird dieser nach unten aus der Trägerplattform 24 herausgeworfen, wobei die Datenverbindung zwischen dem Flugkörper 26 und Trägerplattform 24 abreißt. Hierdurch wird ein Ausklappen der Flügel und ein Starten des Raketentriebwerks des Flugkörpers 26 ausgelöst, sodass dieser nun selbständig auf das Ziel 30 zufliegt. Die Zielverfolgung erfolgt hierbei mit Hilfe der Sucheroptik 36 die nun einen freien Blick auf das Ziel 30 hat und somit nicht mehr auf die Fremdzieldaten aus der Trägerplattform 24 ausgewiesen ist und eine Zielverfolgung mit eigenen Zieldaten aus selbst aufgenommenen Bildern vom Ziel 30 durchführt.

Der Zeitpunkt des Umschaltens von der Verarbeitung von Fremdzieldaten, z. B. fremder Bilder, zur Verarbeitung eigener Zieldaten durch das Suchersystem 28 wird vom Prozessmittel 48 ausgewählt. Hierbei kann der Zeitpunkt des Abreißens der Datenverbindung oder ein früherer oder ein späterer Zeitpunkt gewählt werden. Unabhängig davon wird die Zielverfolgung durch das Prozessmittel 48 zum Zeitpunkt des Umschaltens in einem fehlertoleranteren Modus durchgeführt als vor und nach dem Umschalten, um das Ziel bei einem evtl. Bildversatz oder Änderungen der Zieleigenschaften im Bild nicht zu verlieren. Es kann beispielsweise im gleichen Modus operiert werden, der gewählt wird, wenn das Ziel 30 für eine kurze Zeit verdeckt und danach wieder aufgefasst wird.

In einer weiteren Ausführungsform der Erfindung sind die Suchersysteme 28, 32 nicht identisch. Dies ist sinnvoll, wenn von der Trägerplattform 2, 4, 6, 24 unterschiedliche Flugkörper 26 verschossen werden, die unterschiedliche Suchersysteme 28 aufweisen. Um die LOBL-Fähigkeit für alle Flugkörper 26 innerhalb der Trägerplattform 2, 4, 6, 24, also im noch "blinden" Zustand, zu gewährleisten, wählt das Prozessmittel 50 des Flugzeugs bzw. der Trägerplattformen 2, 4, 6 entsprechende Datenformen zur Übergabe an das entsprechende Suchersystem des ausgewählten Flugkörpers 26, sodass eine Sichtsimulation für jeden Flugkörper 26 erreicht wird. Nach dem Auswählen eines Flugkörpers 26, der als nächstes gestartet werden soll, sind dem Prozessmittel 50 die Daten zum Suchersystem 28 des ausgewählten Flugkörpers 26 bekannt. Das Suchersystem 32 ist hierbei so ausgeführt, insbesondere hinsichtlich seiner Sucheroptik 38 und dem Detektor 42 sowie der Sucherbildverarbeitung 46, dass jedem der Flugkörper 26 solche Zieldaten, z. B ein solches Bild bzw. solche Bilddaten, zur Verfügung gestellt werden können, die der entsprechende Flugkörper 26 bzw. dessen Suchersystem 28 selbst erzeugen würde, wenn es eine freie Sicht auf das Ziel 8, 30 hätte. Hierbei ist jeder Flugkörper 26 mit einer entsprechenden Schnittstelle 52 versehen zur Datenkopplung an das Suchersystem 32 der Trägerplattform 2, 4, 6, 24. Vor dem Start eines Flugkörpers 26 werden nun jedem Flugkörper 26 die Daten zur Verfügung gestellt, die das Prozessmittel 48 des Flugkörpers 26 befähigen, durch die Blicksimulation auf das Ziel 8, 30 die entsprechenden Aktionen auszuführen, die bei selbständiger freier Sicht auf das Ziel 8, 30 durchgeführt werden würden.

### Bezugszeichenliste

- 2: Trägerplattform
- 4: Trägerplattform
- 6: Trägerplattform
- 8: Ziel
- 10: Suchersystem
- 12: Suchersystem
- 14: Suchersystem
- 16: Relativwinkel
- 18: Abstand
- 20: Entfernung
- 22: Aufschlagpunkt
- 24: Trägerplattform
- 26: Flugkörper
- 28: Suchersystem
- 30: Ziel
- 32: Suchersystem
- 34: Behälter
- 36: Sucheroptik
- 38: Sucheroptik
- 40: Detektor
- 42: Detektor
- 44: Sucherbildverarbeitung
- 46: Sucherbildverarbeitung
- 48: Prozessmittel
- 50: Prozessmittel
- 52: Schnittstelle
- 54: Schnittstelle
- 56: Kabel
- 58: Aktuator

## Patentansprüche

1. Verfahren zur Ortsbestimmung eines fliegenden Ziels (8, 30), bei dem das Ziel (8, 30) von zumindest zwei voneinander beabstandeten Suchersystemen (10, 12, 14, 28, 32) erkannt und vermessen wird und aus daraus abgeleiteten Vermessungsdaten die Position des Ziels (8, 30) relativ zu zumindest einem der beiden Suchersysteme (10, 12, 14, 28, 32) bestimmt wird,
**dadurch gekennzeichnet,**
**dass** die Suchersysteme (10, 12, 14, 28, 32) datenvernetzte, passive Zielverfolgungssysteme für Flugkörper (26) sind, die das Ziel (8, 30) selbständig verfolgen und die Flugkörper (26) auf das Ziel (8, 30) ausrichten, und die von ihnen ermittelten Vermessungsdaten zusammengeführt und daraus der Ort des Ziels (8, 30) bestimmt wird.

2. Verfahren nach Anspruch 1,
**dadurch gekennzeichnet,**
**dass** zumindest eines der Suchersysteme (10, 12, 14, 32) Teil einer Trägerplattform (2, 4, 6, 24) ist, aus der zumindest ein Flugkörper (26) gestartet wird.

3. Verfahren nach Anspruch 2,
**dadurch gekennzeichnet,**
**dass** das Suchersystem (10, 12, 14, 32) der Trägerplattform (2, 4, 6, 24) zusätzlich zu einem Suchersystem (28) des zu startenden Flugkörpers (26) vorhanden ist.

4. Verfahren nach Anspruch 3,
**dadurch gekennzeichnet,**
**dass** das Suchersystem (10, 12, 14, 32) der Trägerplattform (2, 4, 6, 24) das Ziel (8, 30) anvisiert, Zieldaten erzeugt und dem Suchersystem (28) des zu startenden Flugkörpers (26) übergibt und das Suchersystem (28) des Flugkörpers (26) das Ziel (8, 30) als solches anhand der übergebenen Zieldaten erfasst während ihm die Sicht auf das Ziel (8, 30) versperrt ist.

5. Verfahren nach einem der vorhergehenden Ansprüche,
**dadurch gekennzeichnet,**
**dass** ein Flugkörper (26) aus einer Trägerplattform (2, 4, 6, 24) gestartet wird und eines der beiden Suchersysteme (28) Teil des Flugkörpers (26) und das zweite Suchersystem (10, 12, 14, 32) Teil der Trägerplattform (2, 4, 6, 24) ist.

6. Verfahren nach einem der vorhergehenden Ansprüche,
**dadurch gekennzeichnet,**
**dass** beide Suchersysteme (10, 12, 14, 32) jeweils Teil einer Trägerplattform (2, 4, 6, 24) sind, aus der jeweils Flugkörper (26) gestartet werden.

7. Verfahren nach einem der vorhergehenden Ansprüche,
**dadurch gekennzeichnet,**
**dass** mit Hilfe der beiden Suchersysteme (10, 12, 14, 28, 32) eine Flugbahn und ein Auftreffpunkt (22) des Ziels (8, 30) bestimmt werden.

8. Verfahren nach Anspruch 6 und 7,
**dadurch gekennzeichnet,**
**dass** aus der Flugbahn bestimmt wird, welche der beiden Trägerplattformen (2, 4, 6, 24) zur Abwehr des fliegenden Ziels (8, 30) eingesetzt wird.

9. Verfahren nach einem der vorhergehenden Ansprüche,
**dadurch gekennzeichnet,**
**dass** die Suchersysteme (10, 12, 14, 28, 32) Teil eines Fahrzeugschwarms aus zumindest drei Fahrzeugen mit jeweils einer Trägerplattform (2, 4, 6, 24) zum Starten von Flugkörpern (26) sind, die über ein Datennetzwerk miteinander verbunden sind, und die Ortsbestimmung dezentral in zumindest zwei der Fahrzeuge erfolgt.

10. Vorrichtung zur Ortsbestimmung eines fliegenden Ziels (8, 30) mit zumindest zwei voneinander beabstandeten passiven Suchersystemen (10, 12, 14, 28, 32) und zumindest einem Prozessmittel (48, 50), das dazu vorbereitet ist, die Position des Ziels (8, 30) aus Daten der beiden Suchersysteme (10, 12, 14, 28, 32) zu vermessen und aus den Vermessungsdaten die Position des Ziels (8, 30) relativ zu den beiden Suchersystemen (10, 12, 14, 28, 32) zu bestimmen,
**dadurch gekennzeichnet,**
**dass** die Suchersysteme (10, 12, 14, 28, 32) datenvernetzte, passive Zielverfolgungssysteme für Flugkörper (26) sind, die dazu vorbereitet sind, das Ziel (8, 30) selbständig zu verfolgen und die Flugkörper (26) auf das Ziel (8, 30) auszurichten.
